# EUROPEAN PATENT SPECIFICATION

(11) **EP 3 902 889 B1**
(45) Date of publication and mention of the grant of the patent: **25.03.2026**
(21) Application number: 19832103.6
(22) Date of filing: 20.12.2019
(51) Int. Cl.: C09J 175/04, C08G 18/24, C08G 18/40, C08G 18/76, C08G 18/32, C08G 18/42, C08G 18/44, C08G 18/48, C08G 18/65, C08G 18/73, C08G 18/75

(54) **THERMOPLASTIC POLYURETHANE HOT-MELT ADHESIVE AND ITS USE**
THERMOPLASTISCHER POLYURETHAN-HEISS-SCHMELZKLEBER UND SEINE VERWENDUNG
ADHÉSIF POLYURÉTHANE THERMOPLASTIQUE THERMOFUSIBLE ET SON UTILISATION

(30) Priority: 24.12.2018 WO PCT/CN2018/123222
(43) Date of publication of application: 03.11.2021
(73) Proprietor: BASF SE, 67056 Ludwigshafen am Rhein (DE)
(72) Inventor: CHEN, Po Han, Changhua, 50544 (TW); CHOU, Cheng Hung, Changhua, 50544 (TW); WANG, Jiang Wei, Shanghai, 200137 (CN); FAN, Yan Bin, Shanghai, 200137 (CN); RWEI, Syang-Peng, Taipei, 10608 (TW); WU, Chien-Hui, Taipei, 10608 (TW); HUANG, Yu-Lin, Taipei, 10608 (TW); TSENG, Pei-Hsuan, Taipei, 10608 (TW); HUANG, Szu-Yuan, Taichung City, 40755 (TW); LIN, Yen-Wen, Taichung City, 40755 (TW); CHANG, Chien-Feng, Taichung City, 40755 (TW)
(74) Representative: BASF IP Association
(86) International application number: PCT/EP2019/086547
(87) International publication number: WO 2020/136106

(56) References cited:
- EP-A1- 3 243 863
- CN-A- 101 616 983
- DE-A1- 102016 218 964

## Description

### Technical field

The present invention relates to a thermoplastic polyurethane hot-melt adhesive, that can be used to prepare a shoe sole assembly (for bonding shoe outsole and shoe midsole), and a method of making the shoe sole assembly.

### Background of arts

In 2013, the global sales volume of branded sports shoes was approximately US$46.5 billion (Source: Sporting Goods Intelligence). Most of shoe sole assemblies were obtained by bonding rubber outsoles and ethylene-vinyl acetate (EVA) foamed midsoles. In current manufacturing process, whether it is rubber outsole or EVA foamed midsole, it is necessary to separately apply different solvent-based primers, and remove the solvent in the oven, then separately coat solvent-based (or water-based) polyurethane (PU) glue, and remove the solvent (or water) in the oven, the shoe outsole and the shoe midsole can be bonded until the solvent (or water) was removed completely. The aforementioned operations take time and labor, but also require the use of organic solvents that are harmful to the human body and the environment. In the current situation of high awareness of environmental protection and increasingly strict government regulations, manufacturers are all committed to avoiding the use of organic solvents in order to achieve better working conditions, a green and environmentally friendly manufacture.

CN103756576B discloses a hot-melt adhesive film for bonding shoe soles, characterized in that it comprises the following raw materials in parts by weight: 50-60 parts of ethylene-vinyl acetate (EVA); 30-60 parts of modified ethylene-ethyl acrylate (EEA); 15-35 parts of styrenebutadiene block copolymer; 5-20 parts of terpene resin or petroleum resin; and 0.1-0.5 part of bis-(tert-butylperoxyisopropyl) benzene, used for bonding shoes outsole and midsole.

CN104559843A discloses a hot-melt adhesive film for bonding rubber/foamed EVA composite shoe soles, comprising a hot-melt adhesive film and a release film, characterized in that the hot-melt adhesive film is prepared by the following raw materials in parts by weight: 60-95 parts of polyethylene-ester copolymer; 5-40 parts of rubber; and 0.1-8 parts of auxiliaries. In the process of use, the hot-melt adhesive film is affixed to the rubber outsole surface and vulcanized together with the rubber outsole, and then the vulcanized rubber outsole is compounded with the EVA midsole, which can completely bond the hot-melt adhesive film and the rubber outsole and the midsole together, and does not generate bubbles during the vulcanization process, enhancing its bonding strength.

EP 3423863 A1 relates to block copolymers of OH-functionalized polyolefins and polyesters in adhesives or sealants and to adhesives or sealants containing said block copolymers. In the examples, an OH-functionalized polyester is reacted with an MDI. The reaction mixtures from which the sealants / adhesives are prepared do not contain chain extenders.

Thermoplastic polyurethane (TPU) has important industrial applications due to its good elastomer properties and melt processing properties. A review of the production, properties and application of TPU is given, for example, in Kunststoff Handbuch [G. Becker, D. Braun], Vol. 7, "Polyurethanes", Munich, Vienna, Carl Hanser Verlag, 1983. TPUs are generally synthesized from linear polyols such as polyester diols, polyether diols or polycarbonate diols, organic diisocyanates and usually short chain difunctional alcohols (i.e., chain extenders). TPU can be produced by continuous or discontinuous methods. The well-known production methods are, for example, the belt method disclosed in GB-A 1 057 018 and the extruder method disclosed in DE-A 19 64 834. The synthesis of melt processable polyurethane elastomers can be carried out stepwise (i.e., the prepolymer method) or by the simultaneous reaction of all components in one reaction stage (one-shot method).

Usually thermoplastic polyurethane hot-melt adhesive (TPU HMA) is very polar, so for materials that are also polar (such as: natural leather, polyester fabric, polyamide fabric), there will be very good adhesion. However, when TPU HMA encounters very low polar (or non-polar) materials such as glass, rubber, EVA, and polyolefins, poor adhesion can occur. For this reason, special materials are often used to modify TPU HMA to improve its adhesion to low polar (non-polar) materials. US 4,718,956 discloses octadecyl triethoxysilane which is suitable for the temporary bonding of TPU to glass. US 2004/0054113 discloses the use of difunctional silanes that can be incorporated into TPU. Silanes can also be grafted onto TPU, for example as disclosed in WO 00/75213 or S. Dassin et al., Polymer Eng. Sci., 2002, 42(8), 1724-1739. However, although the above-mentioned modified TPU HMA has a significant improvement in the adhesion to glass, it still has no significant improvement in the adhesion to rubber and EVA.

CN101611086B discloses a composition comprising A) at least one olefin-based polymer, or at least one halogenated ethylene-based polymer, or at least one elastomer rubber; B) at least one thermoplastic polyurethane; and C) at least one polydiene- or polydiol-based polyurethane, and a footwear article comprising at least one component formed from the composition of this invention. CN101616983B also discloses a footwear article comprising at least one component formed from a blend of an np-PO and a polydiene-based polyurethane or a polydiol-based polyurethane. The footwear article is selected from the group consisting of shoe outsole, shoe midsole, shoe unit-sole, an over-molded article, a natural leather article, a synthetic leather article, an upper, a laminated article, a coated article, a boot, a sandal, galoshes, a plastic shoe, and combinations thereof.

US 6,323,299 B1 discloses a method for preparing a thermoplastic polyurethane elastomer composition comprising: (a) first reacting the polydiene and the isocyanate at 70 to 100 °C for 10 to 60 minutes, (b) adding to the reaction product of (a) the polymeric diol and reacting these components at 70 to 100 °C for 60 to 150 minutes to form a prepolymer, and (c) adding the chain extender and reacting these components at 70 to 125 °C for 1 to 24 hours to form a thermoplastic polyurethane that exhibits softness and high strength.

However, there is still a need to find a hot-melt adhesive that has good adhesion for a low polar (or non-polar) material, especially for a rubber shoe outsole and an EVA shoe midsole, which is environmentally friendly and easy to use under better working conditions.

### Invention summary

To this end, the present invention provides a thermoplastic polyurethane hot-melt adhesive comprising: a reaction product of (a) an isocyanate; (b) a polyol comprising 10 to 40 wt% of a polyolefin polyol based on the total weight of the polyol; and (c) a chain extender, where the chain-extender is a diol-based chain extender, wherein the polyolefin polyol comprises an ethylenically unsaturated group, and the polyol further comprises a polyester polyol, a polyether polyol, a polycarbonate polyol, or a combination thereof.

The above-mentioned thermoplastic polyurethane hot-melt adhesive has a flow beginning temperature (Tfb) of at least 70°C, preferably at least 75°C, more preferably at least 80°C as measured by JIS K7311-1995 (die:(a)) and by using the Shimadzu Flowtester Capillary Rheometer CFT-500D, to avoid the delamination of the shoes outsole/midsole laminate during the transportation period in the container.

The present invention also provides a method of producing a shoe sole assembly comprising: (1) placing a sheet or powder of the thermoplastic polyurethane hot-melt adhesive on the shoe outsole, heating vulcanizing; and (2) placing a shoe midsole on the thermoplastic polyurethane hot-melt adhesive to obtain a shoe sole preform, heating and pressing (i.e. secondary pressing sole mould) the shoe sole preform to produce the shoe sole assembly. The above-mentioned thermoplastic polyurethane hot-melt adhesive has good adhesion to low polar (or non-polar) materials, especially rubber outsoles and EVA midsoles, and is environmentally friendly and easy to use.

### Description of the drawings

FIG. 1 is a process flow diagram for producing a shoe sole assembly according to the traditional process.
FIG. 2 is a process flow diagram for producing a shoe sole assembly according to one embodiment of the invention.

### Embodiments

The thermoplastic polyurethane hot-melt adhesive comprises: a reaction product of (a) an isocyanate; (b) a polyol comprising 10 to 40 wt% of polyolefin polyol based on the total weight of the polyol; and (c) a chain extender, where the chain-extender is a diol-based chain extender, wherein the polyolefin polyol comprises an ethylenically unsaturated group, and the polyol further comprises a polyester polyol, a polyether polyol, a polycarbonate polyol, or a combination thereof.

According to the invention, suitable isocyanates can comprise, for example, aromatic, aliphatic, alicyclic, araliphatic, heterocyclic isocyanates, as described in Justus Liebigs Annalen der Chemie, 562, pp. 75-136. Preferably, the isocyanate can comprise an aromatic isocyanate, an aliphatic isocyanate, an alicyclic isocyanate, or a combination thereof.

Preferably, the aromatic isocyanate is an aromatic diisocyanate and can comprise, for example, 2,4-toluene diisocyanate, 2,6-toluene diisocyanate, 4,4'-diphenylmethane diisocyanate, 2,4-diphenylmethane diisocyanate, 2,2'-diphenylmethane diisocyanate, urethane-modified liquid 4,4'-diphenylmethane diisocyanate and/or 2,4-diphenylmethane diisocyanate, 4,4'-diisocyanato-1,2-diphenylethane, 1,5-naphthalene diisocyanate, and combinations thereof.

In a preferred embodiment, suitable aromatic diisocyanates can comprise, for example, 2,4- and 2,6-toluene diisocyanate, a mixture of 2,4- and 2,6-toluene diisocyanate, 4,4'-diphenylmethane diisocyanate, 2,4-diphenylmethane diisocyanate and 2,2'-diphenylmethane diisocyanate, a mixture of 2,4-diphenylmethane diisocyanate and 4,4'-diphenylmethane diisocyanate, urethane-modified liquid 4,4'-diphenylmethane diisocyanate and/or 2,4-diphenylmethane diisocyanate, 4,4'-diisocyanato-1,2-diphenylethane and 1,5-naphthylene diisocyanate.

Preferably, the aliphatic isocyanate is an aliphatic diisocyanate and can comprise: ethylene diisocyanate, 1,4-tetramethylene diisocyanate, 1,12-dodecane diisocyanate, 1,6-hexamethylene diisocyanate, and combinations thereof.

Preferably, the cycloaliphatic isocyanate is an alicyclic diisocyanate and can comprise: isophorone diisocyanate, 1,4-cyclohexane diisocyanate, 1-methyl-2,4-cyclohexane diisocyanate, 1-methyl-2,6-cyclohexane diisocyanate and its corresponding isomer mixture, 4,4'-, 2,4- and 2,2'-dicyclohexylmethane diisocyanate and their corresponding isomer mixtures, and combinations thereof.

According to the invention, aromatic and/or alicyclic diisocyanates are preferably used. More specifically, 4,4'-diphenylmethane diisocyanate, 1,4-cyclohexane diisocyanate, 1,6-hexamethylene diisocyanate, isophorone diisocyanate, and dicyclohexylmethane diisocyanate are particularly preferred. These diisocyanates can be used alone or as a mixture. They can also be used with up to 15 mol% (calculated relative to the total amount of diisocyanate) of polyisocyanate. However, the maximum amount of polyisocyanate added should be such that the resulting product can still be melt processed.

The polyolefin polyol or the other polyol in component (b) preferably has a number average molecular weight (Mn) of 450-9,900 g/mol, more preferably 600-8,000 g/mol, furthermore preferably 800-6,000 g/mol, and preferably has an average of 1.5-3.0, more preferably 1.8-2.5 hydroxyl functional groups.

The polyolefin polyol in the invention is a polyol which contains polyolefin segments. The polyolefin segments are obtainable from multi-ethylenically unsaturated monomers.

Preferably, the multi-ethylenically unsaturated monomers are diethylenically or triethylenically unsaturated monomers. Preferably, the multi-ethylenically unsaturated monomers are alkyl group substituted multi-ethylenically unsaturated monomers, more preferably conjugated diene monomers. The alkyl group could include linear alkyl group and/or cycloalkyl group. The conjugated diene monomer preferably contains 4 to 10 carbon atoms, preferably 4 to 6 carbon atoms. In one embodiment, the conjugated diene monomer is butadiene, isoprene, or combination thereof.

In a preferred embodiment, the polyolefin polyol is a polydiene polyol, more preferred is polybutadiene diol, polyisoprene diol, or combination thereof.

In a preferred embodiment, the polyol comprises 10 to 15 wt% of the polyolefin polyols, based on the total weight of the polyol.

The polyol further comprises a polyester polyol, a polyether polyol, a polycarbonate polyol, or a combination thereof.

Suitable polyester polyols include those obtained, for example, from dicarboxylic acids having 2 to 12 carbon atoms, preferably 4 to 6 carbon atoms, and polyhydric alcohols. Suitable dicarboxylic acids include, for example, the following compounds: aliphatic dicarboxylic acids such as succinic acid, glutaric acid, adipic acid, suberic acid, azelaic acid, and sebacic acid; or aromatic dicarboxylic acids such as phthalic acid, isophthalic acid and terephthalic acid. The dicarboxylic acids can be used alone or as a mixture, for example as a mixture of succinic acid, glutaric acid and adipic acid. For the preparation of the polyester polyols, it is possible to optionally use the corresponding dicarboxylic acid derivatives, such as carboxylic acid diesters, anhydrides or acid chlorides having 1 to 4 carbon atoms in the alcohol residue instead of dicarboxylic acid. Examples of suitable polyhydric alcohols include diols having 2 to 10 carbon atoms, preferably 2 to 6 carbon atoms, such as ethylene glycol, diethylene glycol, 1,4-butanediol, 1,5-pentanediol, 1,6-hexanediol, 1,10-decanediol, 2,2-dimethyl-1,3-propanediol, 1,3-propanediol, or dipropylene glycol. Depending on the desired properties, the polyol can be used alone or as a mixture. Preferred polyester polyols include poly (ethylene glycol adipate), poly (1,4-butanediol adipate), poly (ethylene glycol/1,4-butanediol adipate), poly (1,6-hexanediol/neopentyl glycol adipate), poly (1,6-hexanediol/1,4-butanediol adipate) and polycaprolactone, condensation product of ω-hydroxy carboxylic acids such as ω-hydroxy hexanoic acid or polymerization product of lactones such as optionally substituted ω-caprolactone. Esters of carbonic acid with the above diols, especially those having 4 to 6 carbon atoms such as 1,4-butanediol or 1,6-hexanediol, are also suitable. Preferably, the polyester polyol has a number average molecular weight (Mn) of 450-9,900 g/mol and can be used alone or as a mixture.

Suitable polyether polyols can be prepared as follows: for example, reacting one or more alkylene oxides having 2 to 4 carbon atoms and starter molecules having two or more active hydrogen atoms. Alkylene oxides that may be mentioned by way of example include: ethylene oxide, 1,2-propylene oxide, epichlorohydrin, 1,2-butylene oxide and 2,3-butylene oxide. Preferred for use are ethylene oxide, propylene oxide and mixtures of 1,2-propylene oxide and ethylene oxide. The alkylene oxide can be used alone, or in sequence, or in the form of a mixture. Suitable starter molecules include, for example, the following compounds: water; amine alcohols, such as N-alkyl diethanolamine, such as N-methyl diethanolamine; and glycols such as ethylene glycol, 1,3-propanediol, 1,4-butanediol and 1,6-hexanediol. Optionally, a mixture of starter molecules can also be used. Suitable polyether polyols also include hydroxy-containing polymerized products of tetrahydrofuran. Based on the weight percentage of the difunctional polyether polyols, it is also possible to use a trifunctional polyether polyols in a proportion of about 0-30% by weight. The maximum amount of trifunctional polyether polyols should be such that the final product obtained can still be melt processed. Preferably, the polyether polyols have a number average molecular weight (Mn) of 600 to 5,000 g/mol. These polyether polyols can be used alone or as a mixture.

According to the invention, the chain extender is a diol-based chain extender, such as a diol compound containing 2-14 carbon atoms, including, for example, ethylene glycol, 1,2-propanediol, 1,3-propanediol, 1,3-butanediol, 1,4-butanediol, 2,3-butanediol, 1,5-pentanediol, 1,2-hexanediol, 1,6-hexanediol, diethylene glycol, dipropylene glycol, 1,4-cyclohexanediol, 1,4-dimethanol cyclohexane and neopentyl glycol. Preferred compounds for use as a chain extender are ethylene glycol, 1,4-butanediol, 1,6-hexanediol, 1,4-bis(β-hydroxyethyl) hydroquinone or 1,4-bis(β-hydroxyethyl) bisphenol A. Lesser amounts of triols can also be used. In a preferred embodiment, the chain extenders include ethylene glycol, propylene glycol, 1,4-butanediol, 1,5-pentanediol, 1,6-hexanediol, hydroquinone bis(2-hydroxyethyl) ethers and combinations thereof. More preferably, the chain extender is 1,4-butanediol.

In a preferred embodiment, the thermoplastic polyurethane hot-melt adhesive comprises: a reaction product of (a) 4-40 wt% of the isocyanate; (b) 50-95 wt% of the polyol; and (c) 1-10 wt% of the chain extender, said weight percentage being based on the total weight of (a), (b) and (c).

The thermoplastic polyurethane hot-melt adhesive comprises 90-100 wt%, preferably 95-100 wt% of the above reaction product, based on the weight of the thermoplastic polyurethane hot-melt adhesive.

The TPU HMA of the present invention may also contain up to about 10% by weight of one or more commonly used auxiliaries and additives. Typical auxiliaries and additives include but are not limited to catalysts, slip agents and release agents such as fatty acid esters and their metal soaps, fatty acid amides, fatty acid ester amides and silicone compounds, light stabilizers, plasticizers, anti-blocking agents, inhibitors, anti-hydrolysis agents, heat and fading stabilizers, dyes, pigments, inorganic and/or organic fillers, fillers with active substances that inhibit moulds and bacteria, and mixtures thereof. Further details regarding the above auxiliaries and additives can be found in the literatures. In particular, these details are disclosed, for example, by J.H.Saunders and K.C.Frisch, "High Polymers", XVI Volume, "Polyurethane", Parts I and II, Verlag Interscience Press, or R.Gchter and H.Mller (Hanser Verlag Munich 1990), "Taschenbuch fr Kunststoff-Additive" published in 1962 and 1964 respectively or DE-A 29 01 774. The light stabilizers are preferably UV stabilizers, antioxidants and/or HALS (hindered amine light stabilizer) compounds. Further details on suitable light stabilizers can be found in the literature, for example in H. Zweifel, "Plastics Additives Handbook", 2001, 5th edition, Carl Hanser Verlag, Munich.

The thermoplastic polyurethane hot-melt adhesive of the present invention is prepared by a one-shot method, that is, a thermoplastic polyurethane hot-melt adhesive is obtained by reacting all components simultaneously.

According to the invention, there is provided a method of producing a shoe sole assembly comprising: (1) placing a sheet or powder of thermoplastic polyurethane hot-melt adhesive on the shoe outsole, heating vulcanizing; and (2) placing a shoe midsole on the thermoplastic polyurethane hot-melt adhesive to obtain a shoe sole preform, heating and pressing (i.e. secondary pressing sole mould) the shoe sole preform to produce the shoe sole assembly. The heating in step (1) or (2) are performed at a conventional temperature, for example, heating is performed at a temperature of 120-180°C, more preferable is 140-180°C.

In one embodiment of the present invention, the method comprises the following steps:
(1) placing a sheet or powder of the thermoplastic polyurethane hot-melt adhesive and then a release film on the shoe outsole;
(2) heating vulcanization;
(3) taking off the release film;
(4) demoulding and deflashing;
(5) placing a shoe midsole on the thermoplastic polyurethane hot-melt adhesive to obtain a shoe sole preform, heating and pressing (i.e. secondary pressing sole mould); and
(6) demoulding and deflashing to obtain the shoe sole assembly.

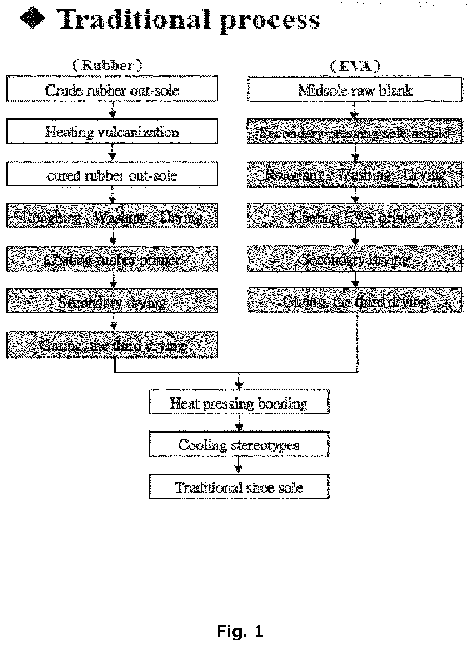

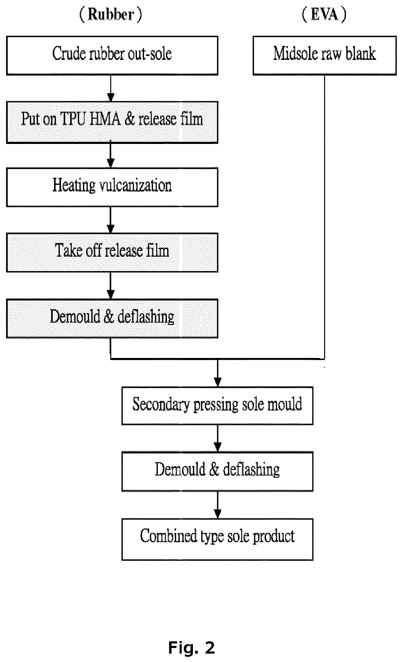

FIG. 1 shows a process flow diagram for producing a shoe sole assembly according to the traditional process, while FIG. 2 shows a process flow diagram for producing a shoe sole assembly according to one embodiment of the present invention. By comparing FIG. 1 and FIG. 2, it was found that the traditional process is more complex than that of the present invention. Specially, the process of the present invention omits a number of processing steps, such as roughing, washing, drying, coating rubber primer, secondary drying, gluing, the third drying for the processing of the shoe outsole, and secondary pressing midsole mould, roughing, washing, drying, coating EVA primer, secondary drying, gluing, the third drying for the processing of the shoe midsole. Generally, it needs about 18 to 28 minutes for completing a shoe sole assembly according to the method of the present invention, while it needs about 46 to 75 minutes for completing a shoe sole assembly according to the traditional method. Thus, the present method not only saves the time cost but also saves the economic cost, and avoids the use of volatile substances, which is environment-friendly.

In one embodiment, the outsole is made of rubber, polyvinyl chloride (PVC), thermoplastic polyurethane (TPU), thermoplastic ester elastomer (TPEE), or a combination thereof. More preferably, the outsole is made of rubber.

In one embodiment, the midsole is made of ethylene vinyl acetate (EVA) foam, polyvinyl chloride (PVC) foam, thermoplastic polyurethane (TPU) foam, thermoplastic ester elastomer (TPEE) foam, or a combination thereof. More preferably, the midsole is made of ethylene vinyl acetate (EVA) foam.

The present invention also provides a shoe sole assembly comprising the thermoplastic polyurethane hot-melt adhesive above, a shoe outsole and a shoe midsole.

In one embodiment, the peeling strength between the shoe outsole and the shoe midsole in the shoe sole assembly is greater than 24.517 N/cm (2.5 kgf/cm), preferably greater than 29.420 N/cm (3.0 kgf/cm), more preferably greater than 39.227 N/cm (4.0 kgf/cm), as measured according to ASTM D1876.

### Examples

The present invention will be described with reference to the following examples and drawings, which are for illustrative purposes only and should not be construed as limiting the scope of the present invention.

The starting materials and their amounts used in the examples and comparative example are listed in Table 1.
Krasol LBH-P 2000: Mn=1,956~2,317, OH value=46.0-54.5mgKOH/g,hydroxyl functional groups=1.9;
AC1530PH: Mn=2,877~3,074, OH value=36.5~39.0 mgKOH/g, hydroxyl functional groups=2.0.

**Table 1.**

| **Composition** | **Trade Name** | **Supplier** | **Example 1*** | **Example 2** | **Example 3** | **Example 4** | **Example 5** | **Comparative Example 1** |
|---|---|---|---|---|---|---|---|---|
| Isocyanate | Lupranate MS | BASF | 152 g | 152 g | 152 g | 152 g | 152 g | 152 g |
| Polyol | AC1530PH | Tai Chin Chemical Industry Co., LTD. | 779 g | 738 g | 697 g | 697 g | 656 g | 820 g |
| | Krasol LBH-P 2000 | Total Petrochemicals & Refining USA, Inc. | 41 g | 82 g | 123 g | 123 g | 164 g | 0 g |
| Chain Extender | 1,4-BDO | BASF | 28 g | 28 g | 28 g | 28 g | 28 g | 28 g |
| Catalyst | KOSMOS 29 | EVONIK | | | | 0.01 g | | |
| HRA | H01 | BASF | | | | 8 g | | |
| UVA | Tinuvin 327 | BASF | | | | 5 g | | |
| HALS | Tinuvin 765 | BASF | | | | 4g | | |

| | | | | | | | | |
|---|---|---|---|---|---|---|---|---|
| * Example 1 not according to the invention PS. (1) HRA: Hydrolysis Resistance Agent (2) UVA: Ultraviolet Light Absorber (3) HALS: Hindered Amine Light Stabilizer (4)1,4-BDO: 1,4-butanediol | | | | | | | | |

### Examples 1* and 2-5

A mixture of each component was heated to 80°C with stirring by using a paddle mixer (SHIN KWANG GR-150R) for 1 minute at a rotation speed of 500 revolutions per minute (rpm). The TPU HMA is then discharged. The TPU HMA was post-heat treated at 100°C for 60 minutes and then pelletized.

### Comparative Example 1

Comparative example 1 is carried out by same procedure as examples 1-5 by using the components in Table 1.

The TPU HMA prepared in Examples 1*, 2, 3, 4, 5 and Comparative Example 1 was processed into a sheet and placed between a rubber outsole and an EVA foamed midsole, and the TPU HMA was activated by heating at 150-165°C for 5 minutes, and it results in the shaped shoe sole article after cooling. The shaped article was allowed to mature at room temperature for at least 24 hours, and the peel strength of the rubber outsole and the EVA foamed midsole was measured with a tensile tester (Device model: GOTECH Al-7000-M) according to ASTM D1876 and Tfb was measured by JIS K7311-1995 (die:(a)) and by using the Shimadzu Flowtester Capillary Rheometer CFT-500D. The test results are shown in Table 2.

**Table 2. The comparison of peeling strength and Tfb of TPU HMA.**

| Samples | Polyolefin polyol content (wt%) | Peeling Strength [N/cm (kgf/cm)] | Tfb (°C) |
|---|---|---|---|
| Example 1* | 5% | 27.459 (2.8) | 99.6°C |
| Example 2 | 10% | 35.304 (3.6) | 105.3°C |
| Example 3 | 15% | 44.130 (4.5) | 107.9°C |
| Example 4 | 15% | 43.149 (4.4) | 104.2°C |
| Example 5 | 20% | 29.420 (3.0) | 102.7°C |
| Comparative example 1 | 0% | 7.845 (0.8) | 106.5°C |

Table 2 shows that the peel strength of Comparative Example 1 is 7.845 N/cm (0.8 kgf/cm), which is much lower than the standard of 24.517 N/cm (2.5 kgf/cm) required for peel strength on the market, while the peel strengths of Examples 1*-5 exceed the standard of 24.517 N/cm (2.5 kgf/cm), especially Examples 2-5.

In Examples 3 and 4, although their peeling strengths are close to each other, Example 4 can reduce the production time because of the addition of a catalyst. In addition, Example 4 is superior to Example 3 in terms of hydrolysis resistance and yellowing resistance to sunlight, UV light and heat by means of the addition of the hydrolysis resistance agent, UV absorbent, HALS and antioxidant.

## Claims

1. A thermoplastic polyurethane hot-melt adhesive, comprising: a reaction product of (a) an isocyanate; (b) a polyol comprising 10 to 40 wt% of a polyolefin polyol based on the total weight of the polyol; and (c) a chain extender, where the chain-extender is a diol-based chain extender, wherein the polyolefin polyol comprises an ethylenically unsaturated group, and the polyol further comprises a polyester polyol, a polyether polyol, a polycarbonate polyol, or a combination thereof.

2. The thermoplastic polyurethane hot-melt adhesive according to claim 1, wherein the polyolefin polyol is a polydiene polyol.

3. The thermoplastic polyurethane hot-melt adhesive according to claim 2, wherein a diene monomer unit of the polydiene polyol is derived from a conjugated diene monomer containing 4-10 carbon atoms, preferably 4 to 6 carbon atoms.

4. The thermoplastic polyurethane hot-melt adhesive according to any one of claims 1 to 3, wherein the polyol has a number average molecular weight (Mn) of 450-9,900 g/mol, preferably 600-8,000 g/mol, more preferably 800-6,000 g/mol, and has an average of 1.5 to 3.0, preferably 1.8 to 2.5 hydroxyl functional groups.

5. The thermoplastic polyurethane hot-melt adhesive according to any one of claims 1 to 3, wherein the polyol comprises 10 to 15 wt% of the polyolefin polyols.

6. The thermoplastic polyurethane hot-melt adhesive according to claim 2 or 3, wherein the polydiene polyol is polybutadiene diol, polyisoprene diol or a combination thereof.

7. The thermoplastic polyurethane hot-melt adhesive according to any one of claims 1 to 3, wherein the thermoplastic polyurethane hot-melt adhesive has a flow beginning temperature (Tfb) of at least 70°C, preferably at least 75°C, more preferably at least 80°C, measured by JIS K7311-1995 (die:(a)).

8. The thermoplastic polyurethane hot-melt adhesive according to any one of claims 1 to 3, wherein the isocyanate comprises an aromatic isocyanate, an aliphatic isocyanate, an alicyclic isocyanate, and combinations thereof.

9. The thermoplastic polyurethane hot-melt adhesive according to claim 8, wherein the aromatic isocyanate is an aromatic diisocyanate comprising 2,4-toluene diisocyanate, 2,6-toluene diisocyanate, 4,4'-diphenylmethane diisocyanate, 2,4-diphenylmethane diisocyanate, 2,2'-diphenylmethane diisocyanate, urethane-modified liquid 4,4'-diphenylmethane diisocyanate and/or 2,4-diphenylmethane diisocyanate, 4,4'-diisocyanato-1,2-diphenylethane, 1,5-naphthalene diisocyanate, and combinations thereof.

10. The thermoplastic polyurethane hot-melt adhesive according to claim 8, wherein the aliphatic isocyanate is an aliphatic diisocyanate comprising ethylene diisocyanate, 1,4-tetramethylene diisocyanate, 1,12-docecane diisocyanate, 1,6-hexamethylene diisocyanate, and combinations thereof.

11. The thermoplastic polyurethane hot-melt adhesive according to claim 8, wherein the cycloaliphatic isocyanate is an alicyclic diisocyanate comprising isophorone diisocyanate, 1,4-cyclohexane diisocyanate, 1-methyl-2,4-cyclohexane diisocyanate, 1-methyl-2,6-cyclohexane diisocyanate and its corresponding isomer mixture, 4,4'-, 2,4-, and 2,2'-dicyclohexylmethane diisocyanate and their corresponding isomer mixtures, and combinations thereof.

12. The thermoplastic polyurethane hot-melt adhesive according to any one of claims 1 to 3, wherein the chain extender is a diol-based chain extender comprising ethylene glycol, propylene glycol, 1,4-butanediol, 1,5-pentane diol, 1,6-hexanediol, hydroquinone bis(2-hydroxyethyl)ether, and combinations thereof.

13. The thermoplastic polyurethane hot-melt adhesive according to claim 12, wherein the chain extender is 1,4-butanediol.

14. The thermoplastic polyurethane hot-melt adhesive according to any one of claims 1 to 3, comprising: a reaction product of (a) 4-40 wt% of isocyanate; (b) 50-95 wt% of polyol; and (c) 1-10 wt% of chain extender, said weight percentages being based on the total weight of (a), (b) and (c).

15. The thermoplastic polyurethane hot-melt adhesive according to any one of claims 1 to 3, wherein the thermoplastic polyurethane hot-melt adhesive contains 90-100 wt% of the reaction product based on the weight of the thermoplastic polyurethane hot-melt adhesive.

16. The thermoplastic polyurethane hot-melt adhesive according to any one of claims 1 to 3 further comprising one or more additives selected from the group consisting of catalysts, slip agents and release agents, light stabilizers, plasticizers, anti-blocking agents, inhibitors, anti-hydrolysis agents, thermal and fading stabilizers, dyes, pigments, inorganic and/or organic fillers, fillers with active substances that inhibit moulds and bacteria, and mixtures thereof.

17. The thermoplastic polyurethane hot-melt adhesive according to any one of claims 1 to 3, wherein the thermoplastic polyurethane hot-melt adhesive is prepared by a one-shot method.

18. A method of producing a shoe sole assembly comprising: (1) placing a sheet or powder of the thermoplastic polyurethane hot-melt adhesive according to any one of claims 1 to 17 on the shoe outsole, heating vulcanizing; and (2) placing a shoe midsole on the thermoplastic polyurethane hot-melt adhesive to obtain a shoe sole preform, heating and pressing the shoe sole preform to produce the shoe sole assembly.

19. The method according to claim 18, comprises the following steps:
(1) placing a sheet or powder of the thermoplastic polyurethane hot-melt adhesive and then a release film on the shoe outsole;
(2) heating vulcanization;
(3) taking off the release film;
(4) demoulding and deflashing;
(5) placing a shoe midsole on the thermoplastic polyurethane hot-melt adhesive to obtain the shoe sole preform, heating and pressing; and
(6) demoulding and deflashing to obtain the shoe sole assembly.

20. The method according to claim 18 or 19, wherein the shoe outsole is made of rubber, polyvinyl chloride (PVC), thermoplastic polyurethane (TPU), thermoplastic ester elastomer (TPEE), or a combination thereof.

21. The method according to claim 18 or 19, wherein the shoe midsole is made of ethylene vinyl acetate (EVA) foam, polyvinyl chloride (PVC) foam, thermoplastic polyurethane (TPU) foam, thermoplastic ester elastomer (TPEE), or combinations thereof.

22. A shoe sole assembly comprising the thermoplastic polyurethane hot-melt adhesive according to any one of claims 1 to 17, a shoe outsole and a shoe midsole.

23. The shoe sole assembly according to claim 22, wherein the peeling strength between the shoe outsole and the shoe midsole in the shoe sole assembly is greater than 24.517 N/cm (2.5 kgf/cm), preferably greater than 29.420 N/cm (3.0 kgf/cm), more preferably greater than 39.227 N/cm (4.0 kgf/cm), measured according to ASTM D1876.

## Patentansprüche

1. Ein thermoplastischer Polyurethan-Schmelzklebstoff, umfassend: ein Reaktionsprodukt aus
(a) einem Isocyanat;
(b) einem Polyol, das 10 bis 40 Gew.-% eines Polyolefin-Polyols bezogen auf das Gesamtgewicht des Polyols umfasst; und
(c) einem Kettenverlängerer, wobei der Kettenverlängerer ein diolbasierter Kettenverlängerer ist,
wobei das Polyolefin-Polyol eine ethylenisch ungesättigte Gruppe umfasst und das Polyol ferner ein Polyesterpolyol, ein Polyetherpolyol, ein Polycarbonatpolyol oder eine Kombination davon umfasst.

2. Der thermoplastische Polyurethan-Schmelzklebstoff nach Anspruch 1, wobei das Polyolefin-Polyol ein Polydien-Polyol ist.

3. Der thermoplastische Polyurethan-Schmelzklebstoff nach Anspruch 2, wobei eine Dien-Monomereinheit des Polydien-Polyols von einem konjugierten Dien-Monomer mit 4-10 Kohlenstoffatomen, vorzugsweise 4 bis 6 Kohlenstoffatomen, abgeleitet ist.

4. Der thermoplastische Polyurethan-Schmelzklebstoff nach einem der Ansprüche 1 bis 3,
wobei das Polyol ein Zahlenmittelmolekulargewicht (Mn) von 450-9.900 g/mol, vorzugsweise 600-8.000 g/mol, noch bevorzugter 800-6.000 g/mol besitzt und im Durchschnitt 1,5 bis 3,0, vorzugsweise 1,8 bis 2,5 Hydroxyl-Funktionsgruppen aufweist.

5. Der thermoplastische Polyurethan-Schmelzklebstoff nach einem der Ansprüche 1 bis 3, wobei das Polyol 10 bis 15 Gew.-% Polyolefin-Polyole umfasst.

6. Der thermoplastische Polyurethan-Schmelzklebstoff nach Anspruch 2 oder 3, wobei das Polydien-Polyol Polybutadien-Diol, Polyisopren-Diol oder eine Kombination davon ist.

7. Der thermoplastische Polyurethan-Schmelzklebstoff nach einem der Ansprüche 1 bis 3,
wobei der thermoplastische Polyurethan-Schmelzklebstoff eine Fließbeginn-Temperatur (Tfb) von mindestens 70 °C, vorzugsweise mindestens 75 °C, noch bevorzugter mindestens 80 °C aufweist, gemessen nach JIS K7311-1995 (Düse (a)).

8. Der thermoplastische Polyurethan-Schmelzklebstoff nach einem der Ansprüche 1 bis 3, wobei das Isocyanat ein aromatisches Isocyanat, ein aliphatisches Isocyanat, ein alicyclisches Isocyanat oder Kombinationen davon umfasst.

9. Der thermoplastische Polyurethan-Schmelzklebstoff nach Anspruch 8, wobei das aromatische Isocyanat ein aromatisches Diisocyanat umfasst, ausgewählt aus 2,4-Toluylendiisocyanat, 2,6-Toluylendiisocyanat, 4,4'-Diphenylmethandiisocyanat, 2,4-Diphenylmethandiisocyanat, 2,2'-Diphenylmethandiisocyanat, urethanmodifizierter flüssiger 4,4'-Diphenylmethandiisocyanat, 2,4-Diphenylmethandiisocyanat, 4,4'-Diisocyanato-1,2-diphenylethan, 1,5-Naphthylendiisocyanat und Kombinationen davon.

10. Der thermoplastische Polyurethan-Schmelzklebstoff nach Anspruch 8, wobei das aliphatische Isocyanat ein aliphatisches Diisocyanat umfasst, ausgewählt aus Ethylendiisocyanat, 1,4-Tetramethylendiisocyanat, 1,12-Dodecandiisocyanat, 1,6-Hexamethylendiisocyanat und Kombinationen davon.

11. Der thermoplastische Polyurethan-Schmelzklebstoff nach Anspruch 8, wobei das cycloaliphatische Isocyanat ein alicyclisches Diisocyanat umfasst, ausgewählt aus Isophorondiisocyanat, 1,4-Cyclohexandiisocyanat, 1-Methyl-2,4-Cyclohexandiisocyanat, 1-Methyl-2,6-Cyclohexandiisocyanat und deren Isomergemischen, 4,4'-, 2,4- und 2,2'-Dicyclohexylmethandiisocyanat und deren Isomergemischen sowie Kombinationen davon.

12. Der thermoplastische Polyurethan-Schmelzklebstoff nach einem der Ansprüche 1 bis 3, wobei der Kettenverlängerer ein diolbasierter Kettenverlängerer ist, umfassend Ethylenglykol, Propylenglykol, 1,4-Butandiol, 1,5-Pentanediol, 1,6-Hexandiol, Hydrochinonbis(2-hydroxyethyl)ether und Kombinationen davon.

13. Der thermoplastische Polyurethan-Schmelzklebstoff nach Anspruch 12, wobei der Kettenverlängerer 1,4-Butandiol ist.

14. Der thermoplastische Polyurethan-Schmelzklebstoff nach einem der Ansprüche 1 bis 3, umfassend:
(a) 4-40 Gew.-% Isocyanat;
(b) 50-95 Gew.-% Polyol; und
(c) 1-10 Gew.-% Kettenverlängerer,
wobei die Gewichtsprozente auf das Gesamtgewicht von (a), (b) und (c) bezogen sind.

15. Der thermoplastische Polyurethan-Schmelzklebstoff nach einem der Ansprüche 1 bis 3, wobei der thermoplastische Polyurethan-Schmelzklebstoff 90-100 Gew.-% des Reaktionsprodukts bezogen auf das Gewicht des thermoplastischen Polyurethan-Schmelzklebstoffs enthält.

16. Der thermoplastische Polyurethan-Schmelzklebstoff nach einem der Ansprüche 1 bis 3, wobei der Schmelzklebstoff ein oder mehrere Additive umfasst, ausgewählt aus Katalysatoren, Gleit- und Trennmitteln, Lichtstabilisatoren, Weichmachern, Antiblockmitteln, Inhibitoren, Antihydrolyse-Mitteln, thermischen Stabilisatoren, Farbstoffen, Pigmenten, anorganischen und/oder organischen Füllstoffen, Füllstoffen mit aktiven Stoffen gegen Schimmel und Bakterien sowie deren Mischungen.

17. Der thermoplastische Polyurethan-Schmelzklebstoff nach einem der Ansprüche 1 bis 3, wobei der Schmelzklebstoff durch ein One-Shot-Verfahren hergestellt wird.

18. Verfahren zur Herstellung einer Schuhsohlenbaugruppe, umfassend:
(1) Aufbringen eines Blatts oder Pulvers des thermoplastischen Polyurethan-Schmelzklebstoffs nach einem der Ansprüche 1 bis 17 auf die Schuhaußensohle und Heißvulkanisation; und
(2) Aufbringen einer Zwischensohle auf den thermoplastischen Polyurethan-Schmelzklebstoff zur Bildung eines Schuhsohlen-Vorfertigungsprodukts sowie Erhitzen und Pressen desselben zur Herstellung der Schuhsohlenbaugruppe.

19. Das Verfahren nach Anspruch 18, umfassend die folgenden Schritte:
(1) Aufbringen eines Blatts oder Pulvers des Schmelzklebstoffs und anschließend einer Trennfolie auf die Außensohle;
(2) Heißvulkanisation;
(3) Abziehen der Trennfolie;
(4) Entformen und Entgraten;
(5) Aufbringen der Zwischensohle auf den Schmelzklebstoff, Erhitzen und Pressen;
(6) Entformen und Entgraten zur Herstellung der Schuhsohlenbaugruppe.

20. Das Verfahren nach Anspruch 18 oder 19, wobei die Schuhaußensohle aus Gummi, Polyvinylchlorid (PVC), thermoplastischem Polyurethan (TPU), thermoplastischem Esterelastomer (TPEE) oder Kombinationen davon besteht.

21. Das Verfahren nach Anspruch 18 oder 19, wobei die Zwischensohle aus EVA-Schaum, PVC-Schaum, TPU-Schaum, TPEE oder Kombinationen davon besteht.

22. Eine Schuhsohlenbaugruppe, umfassend den thermoplastischen Polyurethan-Schmelzklebstoff nach einem der Ansprüche 1 bis 17, eine Schuhaußensohle und eine Zwischensohle.

23. Die Schuhsohlenbaugruppe nach Anspruch 22, wobei die Abreißfestigkeit zwischen Außensohle und Zwischensohle größer als 24,517 N/cm (2,5 kgf/cm), vorzugsweise größer als 29,420 N/cm (3,0 kgf/cm), noch bevorzugter größer als 39,227 N/cm (4,0 kgf/cm), gemessen nach ASTM D1876, ist.

## Revendications

1. Un adhésif thermofusible en polyuréthane thermoplastique comprenant :
(a) un isocyanate ;
(b) un polyol comprenant 10 à 40 % en poids d'un polyol polyoléfinique basé sur le poids total du polyol ; et
(c) un agent d'allongement de chaîne, l'agent d'allongement de chaîne étant un agent d'allongement à base de diol,
le polyol polyoléfinique comprenant un groupe éthyléniquement insaturé, et le polyol comprenant en outre un polyester-polyol, un polyéther-polyol, un polycarbonate-polyol ou une combinaison de ceux-ci.

2. L'adhésif thermofusible en polyuréthane thermoplastique selon la revendication 1, dans lequel le polyol polyoléfinique est un polyol polydiényle.

3. L'adhésif thermofusible en polyuréthane thermoplastique selon la revendication 2, dans lequel une unité monomère de diène du polyol polydiényle est dérivée d'un monomère de diène conjugué contenant 4 à 10 atomes de carbone, de préférence 4 à 6 atomes de carbone.

4. L'adhésif thermofusible en polyuréthane thermoplastique selon l'une quelconque des revendications 1 à 3, dans lequel le polyol présente une masse moléculaire moyenne en nombre (Mn) de 450 à 9 900 g/mol, de préférence 600 à 8 000 g/mol, plus préférentiellement 800 à 6 000 g/mol, et possède en moyenne de 1,5 à 3,0 groupes fonctionnels hydroxyles, de préférence de 1,8 à 2,5.

5. L'adhésif thermofusible en polyuréthane thermoplastique selon l'une quelconque des revendications 1 à 3, dans lequel le polyol comprend 10 à 15 % en poids de polyols polyoléfiniques.

6. L'adhésif thermofusible en polyuréthane thermoplastique selon la revendication 2 ou 3, dans lequel le polyol polydiényle est un polybutadiène-diol, un polyisoprène-diol ou une combinaison de ceux-ci.

7. L'adhésif thermofusible en polyuréthane thermoplastique selon l'une quelconque des revendications 1 à 3, dans lequel l'adhésif présente une température de début d'écoulement (Tfb) d'au moins 70 °C, de préférence au moins 75 °C, plus préférentiellement au moins 80 °C, mesurée selon JIS K7311-1995 (buse (a)).

8. L'adhésif thermofusible en polyuréthane thermoplastique selon l'une quelconque des revendications 1 à 3, dans lequel l'isocyanate comprend un isocyanate aromatique, aliphatique, alicyclique ou leurs combinaisons.

9. L'adhésif thermofusible en polyuréthane thermoplastique selon la revendication 8, dans lequel l'isocyanate aromatique est un diisocyanate aromatique comprenant : 2,4-toluène-diisocyanate, 2,6-toluène-diisocyanate, 4,4'-diphenylméthane-diisocyanate, 2,4-diphenylméthane-diisocyanate, 2,2'-diphenylméthane-diisocyanate, 4,4'-diphenylméthane-diisocyanate liquide modifié par uréthane, 4,4'-diisocyanato-1,2-diphenyléthane, 1,5-naphtalène-diisocyanate, et leurs combinaisons.

10. L'adhésif thermofusible en polyuréthane thermoplastique selon la revendication 8, dans lequel l'isocyanate aliphatique est un diisocyanate aliphatique comprenant : éthylène-diisocyanate, 1,4-tétraméthylène-diisocyanate, 1,12-dodécane-diisocyanate, 1,6-hexaméthylène-diisocyanate et leurs combinaisons.

11. L'adhésif thermofusible en polyuréthane thermoplastique selon la revendication 8, dans lequel l'isocyanate cycloaliphatique est un diisocyanate alicyclique comprenant : isophorone-diisocyanate, 1,4-cyclohexane-diisocyanate, 1-méthyl-2,4-cyclohexane-diisocyanate,
1-méthyl-2,6-cyclohexane-diisocyanate et leurs mélanges d'isomères, ainsi que 4,4'-, 2,4- et 2,2'-dicyclohexylméthane-diisocyanate et leurs mélanges d'isomères.

12. L'adhésif thermofusible en polyuréthane thermoplastique selon l'une quelconque des revendications 1 à 3, dans lequel l'agent d'allongement de chaîne est un diol comprenant : éthylène-glycol, propylène-glycol, 1,4-butanediol, 1,5-pentanediol, 1,6-hexanediol, hydroquinone-bis(2-hydroxyéthyle)éther, et leurs combinaisons.

13. L'adhésif thermofusible en polyuréthane thermoplastique selon la revendication 12, dans lequel l'agent d'allongement de chaîne est le 1,4-butanediol.

14. L'adhésif thermofusible en polyuréthane thermoplastique selon l'une quelconque des revendications 1 à 3, comprenant :
(a) 4-40 % en poids d'isocyanate ;
(b) 50-95 % en poids de polyol ; et
(c) 1-10 % en poids d'agent d'allongement de chaîne,
les pourcentages en poids étant basés sur le poids total de (a), (b) et (c).

15. L'adhésif thermofusible en polyuréthane thermoplastique selon l'une quelconque des revendications 1 à 3, dans lequel l'adhésif contient 90-100 % en poids du produit de réaction basé sur le poids total de l'adhésif thermofusible.

16. L'adhésif thermofusible en polyuréthane thermoplastique selon l'une quelconque des revendications 1 à 3, comprenant en outre un ou plusieurs additifs choisis parmi : catalyseurs, agents de glissement et agents de démoulage, stabilisants à la lumière, plastifiants, agents anti-blocage, inhibiteurs, agents anti-hydrolyse, stabilisants thermiques et de décoloration, colorants, pigments, charges organiques et/ou inorganiques, charges contenant des substances actives antibactériennes ou antifongiques, et leurs mélanges.

17. L'adhésif thermofusible en polyuréthane thermoplastique selon l'une quelconque des revendications 1 à 3, préparé par un procédé en une seule étape (one-shot).

18. Un procédé de fabrication d'un assemblage de semelles de chaussure comprenant :
(1) le dépôt d'une feuille ou d'une poudre d'adhésif thermofusible en polyuréthane thermoplastique selon l'une quelconque des revendications 1 à 17 sur la semelle extérieure de la chaussure, suivi d'une vulcanisation à chaud ; et
(2) l'application d'une semelle intermédiaire sur l'adhésif thermofusible afin d'obtenir un pré-assemblage de semelle, puis le chauffage et le pressage pour produire l'assemblage final.

19. Le procédé selon la revendication 18 comprenant les étapes suivantes :
(1) dépôt d'une feuille ou d'une poudre d'adhésif, puis d'un film de démoulage sur la semelle extérieure ;
(2) vulcanisation à chaud ;
(3) retrait du film de démoulage ;
(4) démoulage et ébarbage ;
(5) application de la semelle intermédiaire, chauffage et pressage ;
(6) démoulage et ébarbage pour obtenir l'assemblage de semelle.

20. Le procédé selon la revendication 18 ou 19, dans lequel la semelle extérieure est fabriquée en caoutchouc, PVC, TPU, TPEE, ou en une combinaison de ceux-ci.

21. Le procédé selon la revendication 18 ou 19, dans lequel la semelle intermédiaire est fabriquée en mousse EVA, mousse PVC, mousse TPU, TPEE ou en une combinaison de ceux-ci.

22. Un assemblage de semelle comprenant l'adhésif thermofusible en polyuréthane thermoplastique selon l'une quelconque des revendications 1 à 17, une semelle extérieure et une semelle intermédiaire.

23. L'assemblage selon la revendication 22, dans lequel la résistance au pelage entre la semelle extérieure et la semelle intermédiaire est supérieure à 24,517 N/cm (2,5 kgf/cm), de préférence supérieure à 29,420 N/cm (3,0 kgf/cm), plus préférentiellement supérieure à 39,227 N/cm (4,0 kgf/cm), mesurée selon ASTM D1876.
